# EUROPÄISCHE PATENTSCHRIFT

(11) **EP 2 354 091 B1**
(45) Veröffentlichungstag und Bekanntmachung des Hinweises auf die Patenterteilung: **29.11.2017**
(21) Anmeldenummer: 10001239.2
(22) Anmeldetag: 06.02.2010
(51) Int. Cl.: C01B 33/32

(54) **Lagerstabile Silikatlösungen**
Silicate solutions stable in storage
Solutions de silicate stables en stock

(43) Veröffentlichungstag der Anmeldung: 10.08.2011
(73) Patentinhaber: Cognis IP Management GmbH, 40589 Dusseldorf (DE)
(72) Erfinder: Bohlander, Ralf, 40699 Erkrath (DE); Muckenfuß, Silke, 40764 Langenfeld (DE); Ziervogel, Rüdiger, 40789 Monheim (DE)
(74) Vertreter: BASF IP Association

(56) Entgegenhaltungen:
- WO-A2-99/52821
- BE-A- 649 739
- DD-A1- 216 914
- DE-A1- 3 938 789
- GB-A- 2 099 412
- US-A- 4 447 561
- US-A1- 2006 283 095

## Beschreibung

### Gebiet der Erfindung

Die Erfindung betrifft sehr klar filtrierte Alkalisilikatlösungen (Wasserglaslösungen), deren Gefrierpunkt stark abgesenkt ist und die bei Temperaturen unterhalb von -10 °C mindestens einen Monat gegen Austrübungen lagerstabil sind.

### Stand der Technik

Unter Wasserglas versteht der Fachmann bekanntlich aus dem Schmelzfluß erstarrte, glasige, wasserlösliche Alkalisilikate (also Alkalisalze von Kieselsäuren) oder deren viskose wässrige Lösungen. Beim Wasserglas kommen typischerweise 1 bis 5 mol SiO₂ auf 1 mol Alkalioxid (Alk₂O - wobei Alk die Alkalimetalle Lithium, Natrium und Kalium bedeutet), weshalb die Natron- und Kaliwassergläser üblicherweise auch durch den Quotienten %SiO₂ zu %Alkalioxid charakterisiert werden. Wassergläser sind mithin chemisch Alkalisilikate mit einem Molverhältnis (MV) SiO₂ zu Alk₂O im Bereich von 0,5 bis 8, wobei unter diesem Molverhältnis das Molverhältnis der das Alkalisilikat konstituierenden Bausteine SiO₂ und Alk₂O zu verstehen ist. Sie enthalten oligomere Silikatanionen mit Alkalimetallkationen als Gegenionen.

Wassergläser sind in reinem Zustand farblose Gläser, die mit Wasser bei erhöhter Temperatur und Druck kolloidale klare, alkalisch reagierende Lösungen bilden. Wasserglas wird üblicherweise durch Zusammenschmelzen von Quarzsand mit Soda oder Pottasche bei 1400 bis 1500 °C hergestellt, wobei die Kieselsäure das CO₂ austreibt. Die erstarrte Schmelze wird entweder in gemahlenem Zustand in den Handel gebracht oder in eine wässrige Lösung gewünschter Konzentration überführt. Wässrige Lösungen haben den Vorteil besserer Applizierbarkeit in einer Reihe unterschiedlicher anwendungstechnischer Felder.

Wie dem Fachmann bekannt, entsteht bei der Herstellung von Wasserglas im Schmelzofen zunächst eine Schmelze aus Alkalisilikat, welche beim Abkühlen auf Raumtemperatur zu Glasstücken (so genanntes Stückenglas) erstarrt. Diese Glasstücke werden technisch in Druckautoklaven in Wasser gelöst, üblicherweise bei erhöhter Temperatur, etwa bei ca. 140°C (so genannter Löseprozess).
Alternativ kann Sand auch direkt hydrothermal in konzentrierter Alkalilauge gelöst werden, wobei jedoch nur Lösungen mit geringerem MV erhalten werden können.
Technische Wasserglaslösungen enthalten üblicherweise einen Feststoffanteil von ca. 30 bis 60 Gew.-%.
Marktgängige Wasserglaslösungen enthalten unabhängig vom Herstellweg Rohstoffbedingt geringfügige Mengen wasserunlöslicher Verunreinigungen, wobei diese bei marktgängigen wässrigen Lösungen in Summe unterhalb von 0,1 Gew.-% bis 0,01 Gew.-% liegen. Diese Verunreinigungen führen zu einer gewissen Trübung, welche mit dem Auge kaum mehr sichtbar ist; nach Untersuchungen der Anmelderin weisen die genannten marktgängigen Wasserglaslösungen bei Transparenzmessung nach DIN EN ISO 7027 Werte im Bereich von 5 bis 40 FNU auf. BE 649 739 A, WO 99/52821 A2 und US 2006/283095 A1 offenbaren Verfahren zur Herstellung klarer, verdünnter wässriger Lösungen von Silikaten (Wassergläsern) mittels Feinfiltration, DD 216 914 A1, GB 2 099 412 A und US 4 447 561 A befassen sich mit der Herstellung stabiler Wasserglaslösungen mittels alternativer Methoden, DE 39 38 789 A1 weist auf die Bedeutung von Filtration zur Verminderung von Trub in Wasserglaslösungen hin. Alle führenden Hersteller warnen in ihren Informationen bzgl. Lagerung und Transport vor der Frostgefahr beim Umgang mit Wasserglaslösungen. Beim Einfrieren kann es unter Umständen noch zusätzlich zu einer Produktentmischung kommen, wonach die Produkte nicht mehr gebrauchsfähig zu regenerieren sind. Allgemein wird daher angeraten, die Lösungen oberhalb von 5°C zu transportieren und zu lagern. Tanke sollen möglichst im beheizten Betriebsgebäude aufgestellt werden oder sie müssen, falls außen aufgebaut, isoliert und begleitbeheizt ausgerüstet werden (PQ internet info "Storing Liquid Silicates, Storage Tank Recommendations"; Crosfield Chemicals "Sodium Silicates" ed.1976 1-23 Bulk Storage; Diamond Shamrock "Sodium Silicate Handbook" 1982 p.30). Entsprechend wird in Sicherheitsdatenblättern aller führenden Wasserglashersteller vor Frosteinwirkung gewarnt; letzteres auch unabhängig davon, ob es sich um ein technisches Produkt handelt, oder ob für spezielle Anwendungen eine sehr klar filtrierte Lösung ausgeliefert wird. (Beispiel des weltgrößten Herstellers PQ (Philadelphia Quarz Co.): In den Sicherheitsdatenblättern für die Produkte "Sodium Silicate N" (technische Qualität) und "N CLEAR" (speziell filtrierte Qualität) - Molverhältnis (MV) SiO₂ zu Alk₂O bei beiden Produkten 3,3 - oder "Sodium Silicate V gg STAR" (speziell "brillant klare" Qualität) - MV 2,5 - wird 0°C als unterste Lagertemperatur angegeben.

### Beschreibung der Erfindung

Aufgabe der vorliegenden Erfindung war es, klare wässrige Lösungen von Silikaten (Wasserglaslösungen) mit verbesserter Lagerstabilität bereitzustellen. Die Silikatlösungen sollten dabei insbesondere bei Temperaturen unter dem Gefrierpunkt von Wasser, also unterhalb von -10 °C, lagerstabil sein.

Unter Lagerstabilität wird dabei im Rahmen der vorliegenden Erfindung verstanden, dass die Silikatlösungen während einer Lagerung unterhalb von - 10 °C über mindestens 1 Monat (30 Tage) klar und flüssig bleiben, so dass weder irgendwelche Austrübungen oder Phasentrennungen auftreten, noch sich die Lösungen ganz oder teilweise verfestigen bzw. einfrieren.

Der Anmelderin ist es nun gelungen, die genannte Aufgabenstellung zu lösen, obwohl im Stand der Technik vor einer Lagerung von Silikatlösungen unter Frostbedingungen abgeraten wird und zwar aus dem Grunde, dass herkömmliche Silikatlösungen sich unter diesen Bedingungen ganz oder teilweise verfestigen oder doch zumindest Austrübungen bilden. Daher wird durch die vorliegende Erfindung ein bestehendes Vorurteil überwunden.

Gegenstand der Erfindung ist zunächst ein Verfahren zur Herstellung klarer auch bei Temperaturen unterhalb von - 10 °C mindestens 1 Monat gegen Austrübungen lagerstabiler, wässriger Lösungen von Silikaten (Wassergläsern) enthaltend
- 20 bis 40 Gew.-% SiO₂,
- 10 bis 30 Gew.-% M₂O, wobei M ein Kation aus der Gruppe Li⁺, Na⁺, K⁺, NY₄⁺ ist und Y einen Alkyl- oder Alkenylrest mit 1 bis 6 C-Atomen bedeutet,
- Wasser,
wobei man
- eine wässrige Lösung eines Silikates (Wasserglas) der allgemeinen Formel M₂O x nSiO₂, worin M ein Kation aus der Gruppe Li⁺, Na⁺, K⁺, NY₄⁺ ist und wobei Y einen Alkyl- oder Alkenylrest mit 1 bis 6 C-Atomen und n eine Zahl im Bereich von 1 bis 5 bedeutet vorlegt, wobei der Feststoffgehalt der zur Filtration einzusetzenden wässrigen Silikat-Lösungen 40 bis 60 Gew.-% beträgt und
- eine Feinfiltration über ein bei pH-Werten von 12 oder mehr stabiles Filterelement durchführt, mit der Maßgabe, dass die Filtratlösung eine Trübung von 4 FNU oder weniger aufweist, wobei die FNU-Werte gemäß DIN EN ISO 7027 zu messen sind, wobei die Filterelemente eine Porengröße im Bereich von 1 bis 10 µm aufweisen und man die Filtration in einem Temperaturbereich von 70-90 °C durchführt.

Der sogenannte nephelometrische Trübungswert (englisch: nephelometric turbidity unit, NTU) ist eine in der Wasseraufbereitung verwendete Einheit für Trübungsmessungen in Flüssigkeiten. Sie ist die Einheit der mit einem kalibrierten Nephelometer (Trübungsphotometer) gemessenen Trübung einer Flüssigkeit. Die Einheit NTU ist eher im US-amerikanischen Bereich gebräuchlich. Der Grenzwert für die Trübung von Trinkwasser liegt dort und in der Bundesrepublik Deutschland bei 1 NTU. In der Deutschland ist die Einheit TE/F (Trübungseinheit/Formazin) gebräuchlich (In der Trinkwasserverordnung von 2001 wird die Einheit NTU verwendet). Der internationale Trübungsstandard ist die Chemikalie Formazin, die in Wasser unterschiedlich große Partikel bildet. Eine von NTU abgeleitete Einheit ist in der Wasseraufbereitung FNU (formazine nephelometric unit), was in DIN EN ISO 7027 detailliert beschrieben ist.
Der Begriff FNU (formazin nephelometric units) ist dem Fachmann bekannt. Die zur Wertermittlung der FNU-Werte der erfindungsgemäßen Silikatlösungen erforderlichen Trübungsmessungen sind im Rahmen der vorliegenden Erfindung gemäß DIN EN ISO 7027 durchzuführen. Die Trübungsmessungen werden dabei bei 20 °C durchgeführt, wobei man die wäßrigen Silikatlösungen als solche untersucht, also in derjenigen Konzentration, in der sie nach Durchführung der erfindungsgemäßen Filtrationsschrittes vorliegen - der Konzentrationsbereich, innerhalb dessen die FNU-Werte gemessen werden, ist der Konzentrationsbereich technischer Wasserglaslösungen, die üblicherweise einen Feststoffanteil im Bereich von 30 bis 60 Gew.-% aufweisen, wobei der bevorzugte Bereich 35 bis 55 Gew.-% beträgt. Eine Normierung der Messung auf eine bestimmte Konzentration wird deshalb nicht durchgeführt, da die Silikatlösungen beim Verdünnen mit Wasser trüber werden.
Die bei der Feinfiltration - im Folgenden auch abkürzend Filtration genannt - einzusetzenden Filterelemente sind so auszuwählen, dass die Filtratlösung eine Trübung von 4 FNU oder weniger gemäß DIN EN ISO 7027 aufweisen.
Die Filterelemente müssen derart alkaliresistent sein, dass sie bei pH-Werten von 12 oder mehr stabil sind, d.h. unter den dadurch gegebenen hochalkalischen Bedingungen ohne Zersetzung betrieben werden können. Beispiele für geeignete Filterelemente sind Filterplatten aus Fasern der organischen Polymere ABS (Copolymer Acrylnitril/Butadien/Styrol), ECTFE (EthylenChlortrifluorethylen-Copolymer), PE (Polyethylen), PES (Polyethersulfon), PP (Polyproylen), PFA (Perfluoralkoxy-Copolymer), PS (Polystyrol) und PVDF (Polyvinylidenfluorid), Zellstoff oder aus Edelstahl.

Die Filterelemente weisen vorzugsweise eine Porengröße im Bereich von 1 bis 10 µm auf (1 µm = 1 Mikrometer).
Vorzugsweise gilt die Maßgabe, dass die Filtratlösung eine Trübung von 2 FNU oder weniger und insbesondere von 1 FNU oder weniger aufweist.
Vorzugsweise wird die Filtration unter Druck durchgeführt. Dabei ist ein Druckbereich von oberhalb 1 bar bis 10 bar und insbesondere 2 bis 8 bar bevorzugt. Die Filtration wird in einem Temperaturbereich von 70 bis 90 °C durchgeführt. Dadurch erreicht man durch Temperatur-induzierte Viskositätsabsenkung der zu filtrierenden Lösung eine besonders gute Filtrationsrate ohne dass man mit übermäßiger Verdunstung von Wasser aus dem Filtrat rechnen muss; innerhalb dieses Temperaturbereiches ist ein Wert von etwa 80 °C ganz besonders bevorzugt.
Der Feststoffgehalt der zur Filtration einzusetzenden erfindungsgemäßen wässrigen Silikat-Lösungen beträgt 40-60 Gew.-%. Technische Silikat-Lösungen sind dabei bevorzugt.
In einer Ausführungsform liegt das Molverhältnis SiO₂/M₂O im Bereich von 0,5 bis 8, vorzugsweise 1 bis 4 und insbesondere 1,6 bis 2,7.
Die nach dem erfindungsgemäßen Verfahren zugänglichen sehr klaren Silikatlösungen können in den unterschiedlichsten Anwendungsfeldern verwendet werden. Beispiele hierfür sind: Reiniger, Brandschutzbeschichtungsmittel, Umhüllungsmittel für Pigmente, anorganische Kleber oder Rohstofflösung zur Herstellung anderer (unlöslicher) Silikate.
Herkömmliche Silikatlösungen, insbesondere technische Silikatlösungen, die ja komplexe Zusammensetzungen darstellen, werden in ihrer Zusammensetzung durch das oben beschriebene erfindungsgemäße Verfahren verändert. Mögen diese Veränderungen auf den ersten Blick nur geringfügig erscheinen, so handelt es sich faktisch gleichwohl um andere Zusammensetzungen, was sich indirekt in einer sprunghaft verbesserten technischen Wirkung, nämlich der Lagerstabilität bei Temperaturen unterhalb von -10 °C zeigt.
Ein weiterer Erfindungsgegenstand sind dementsprechend klare auch bei Temperaturen unterhalb von - 10 °C mindestens 1 Monat gegen Austrübungen lagerstabile, wässrige Lösungen von Silikaten (Wassergläsern) enthaltend
- 20 bis 40 Gew.-% SiO₂,
- 10 bis 30 Gew.-% M₂O, wobei M ein Kation aus der Gruppe Li⁺, Na⁺, K⁺, NY₄⁺ ist und Y einen Alkyl- oder Alkenylrest mit 1 bis 6 C-Atomen bedeutet,
- Wasser,
wobei diese Lösungen erhältlich sind, indem man
- eine wässrige Lösung eines Silikates (Wasserglas) der allgemeinen Formel M₂O x nSiO₂, worin M ein Kation aus der Gruppe Li⁺, Na⁺, K⁺, NY₄⁺ ist und wobei Y einen Alkyl- oder Alkenylrest mit 1 bis 6 C-Atomen und n eine Zahl im Bereich von 1 bis 5 bedeutet vorlegt, wobei der Feststoffgehalt der zur Filtration einzusetzenden wässrigen Silikat-Lösungen 40 bis 60 Gew.-% beträgt und
- eine Feinfiltration über ein bei pH-Werten von 12 oder mehr stabiles Filterelement durchführt, mit der Maßgabe, dass die Filtratlösung eine Trübung von 4 FNU oder weniger aufweist, wobei die FNU-Werte gemäß DIN EN ISO 7027 zu messen sind, wobei die Filterelemente eine Porengröße im Bereich von 1 bis 10 µm aufweisen und man die Filtration in einem Temperaturbereich von 70-90 °C durchführt.

### Beispiele

### Abkürzungen:

VE-Wasser = vollentsalztes Wasser
PTFE = Polytetrafluorethylen
PP = Polypropylen
FS = Feststoffgehalt (in Gew-.%) der Alkaliwassergläser
MV = Molverhältnis SiO₂ zu Alkalioxid der eingesetzten Natrium- bzw.Kalium-Wassergläser
T = Filtrationstemperatur (in °C)
FH = Filterhilfsmittel
FP-P = Porenweite der Filterplatte (in µm)
FP-M = Material der Filterplatte
TR-vor = Trübung in FNU (gemäß DIN EN ISO 7027) vor der Filtration
TR-nach = Trübung in FNU (gemäß DIN EN ISO 7027) nach derFiltration
GT-vor = Gefriertemperatur (in °C) vor der Filtration
GT-nach = Gefriertemperatur (in °C) nach der Filtration

### Beispiele

In einem 500ml Erlenmeyerkolben wurden technische Wasserglaslösungen vorgelegt und auf eine erhöhte Temperatur gebracht. Die Lösungen wurden über einen Sartorius-100ml-Edelstahldruckfilter mit unterschiedlichen Filterplatten (FP) oder Filterhilfsmitteln (FH) filtriert. Die Trübung/Brillanz der Lösungen wurde vor und nach Filtration mit einem HACH Lange Trübungsphotometer 2100 im Streulicht bestimmt. Die Rohstofflösung und das erzeugte Filtrat wurden im monatlichen Rhythmus in Schritten von 5 °C abgekühlt bis zum Erstarren der Lösung.
Die Daten der durchgeführten Versuchsreihen sind den nachfolgenden Tabellen 1 und 2 zusammengestellt. Die Versuche V1 bis V6 sind Vergleichsversuche. Die Versuche B1 bis B6 sind erfindungsgemäße Versuche.

**Tabelle 1**

| | V1 | V2 | V3 | B1 | B2 | B3 |
|---|---|---|---|---|---|---|
| Wasserglas | Natrium | Natrium | Natrium | Natrium | Natrium | Natrium |
| MV | 3 | 2 | 1,7 | 2 | 2 | 2 |
| FS | 40 | 45 | 45 | 45 | 45 | 45 |
| T | 80 | 70 | 60 | 70 | 70 | 70 |
| FH | Perlite | Sand | Sand | ohne | ohne | ohne |
| FP-P | 100 | 100 | 100 | 5 | 2 | 1 |
| FP-M | Stahl | Stahl | Zellstoff | Zellstoff | Polysulfon | PTFE |
| TR-vor | 40 | 60 | 60 | 60 | 60 | 60 |
| TR-nach | 20 | 30 | 40 | 4 | 1 | 0,5 |
| GT-vor | 0 | -2 | -4 | -2 | -2 | -2 |
| GT-nach | -1 | -3 | -5 | -12 | -14 | -16 |

**Tabelle 2**

| | V4 | V5 | V6 | B4 | B5 | B6 |
|---|---|---|---|---|---|---|
| Wasserglas | Kalium | Kalium | Kalium | Kalium | Kalium | Kalium |
| MV | 3 | 2,4 | 2,4 | 2,4 | 2,4 | 1,6 |
| FS | 40 | 45 | 45 | 45 | 45 | 50 |
| T | 80 | 90 | 90 | 90 | 70 | 80 |
| FH | Perlite | Sand | Cellulose | ohne | ohne | ohne |
| FP-P | 100 | 100 | 100 | 5 | 2 | 1 |
| FP-M | Stahl | Stahl | Tahl | Polysulfon | PP | Polyethersulfon |
| TR-vor | 50 | 60 | 60 | 60 | 60 | 50 |
| TR-nach | 15 | 30 | 14 | 0,8 | 0,8 | 0,7 |
| GT-vor | 0 | -3 | -3- | -3 | -3 | -3 |
| GT-nach | -5 | -4 | -5 | -22 | -24 | -29 |

## Patentansprüche

1. Verfahren zur Herstellung klarer auch bei Temperaturen unterhalb von -10 °C mindestens 1 Monat gegen Austrübungen lagerstabiler, wässriger Lösungen von Silikaten (Wassergläsern) enthaltend
• 20 bis 40 Gew.-% SiO₂,
• 10 bis 30 Gew.-% M₂O, wobei M ein Kation aus der Gruppe Li⁺, Na⁺, K⁺, NY₄⁺ ist und Y einen Alkyl- oder Alkenylrest mit 1 bis 6 C-Atomen bedeutet,
• Wasser,
wobei man
• eine wässrige Lösung eines Silikates (Wasserglas) der allgemeinen Formel M₂O x nSiO₂, worin M ein Kation aus der Gruppe Li⁺, Na⁺, K⁺, NY₄⁺ ist und wobei Y einen Alkyl- oder Alkenylrest mit 1 bis 6 C-Atomen und n eine Zahl im Bereich von 1 bis 5 bedeutet vorlegt, wobei der Feststoffgehalt der zur Filtration einzusetzenden wässrigen Silikat-Lösungen 40 bis 60 Gew.-% beträgt und
• eine Feinfiltration über ein bei pH-Werten von 12 oder mehr stabiles Filterelement durchführt, mit der Maßgabe, dass die Filtratlösung eine Trübung von 4 FNU oder weniger aufweist, wobei die FNU-Werte gemäß DIN EN ISO 7027 zu messen sind, wobei die Filterelemente eine Porengröße im Bereich von 1 bis 10 µm aufweisen und man die Filtration in einem Temperaturbereich von 70-90 °C durchführt.

2. Verfahren nach Anspruch 1, wobei M ein Kation aus der Gruppe Li⁺, Na⁺, K⁺ bedeutet.

3. Verfahren nach Anspruch 1, wobei M das Kation Na⁺ bedeutet und das in der Reaktion eingesetzte Natriumsilikat die Formel Na₂O x nSiO₂ hat, wobei n eine Zahl im Bereich 1,6 bis 2,8 bedeutet.

4. Klare auch bei Temperaturen unterhalb von - 10 °C mindestens 1 Monat gegen Austrübungen lagerstabile, wässrige Lösungen von Silikaten (Wassergläsern) enthaltend
• 20 bis 40 Gew.-% SiO₂,
• 10 bis 30 Gew.-% M₂O, wobei M ein Kation aus der Gruppe Li⁺, Na⁺, K⁺, NY₄⁺ ist und Y einen Alkyl- oder Alkenylrest mit 1 bis 6 C-Atomen bedeutet,
• Wasser,
wobei diese Lösungen erhältlich sind, indem man
• eine wässrige Lösung eines Silikates (Wasserglas) der allgemeinen Formel M₂O x nSiO₂, worin M ein Kation aus der Gruppe Li⁺, Na⁺, K⁺, NY₄⁺ ist und wobei Y einen Alkyl- oder Alkenylrest mit 1 bis 6 C-Atomen und n eine Zahl im Bereich von 1 bis 5 bedeutet vorlegt, wobei der Feststoffgehalt der zur Filtration einzusetzenden wässrigen Silikat-Lösungen 40 bis 60 Gew.-% beträgt und
• eine Feinfiltration über ein bei pH-Werten von 12 oder mehr stabiles Filterelement durchführt, mit der Maßgabe, dass die Filtratlösung eine Trübung von 4 FNU oder weniger aufweist, wobei die FNU-Werte gemäß DIN EN ISO 7027 zu messen sind, wobei die Filterelemente eine Porengröße im Bereich von 1 bis 10 µm aufweisen und man die Filtration in einem Temperaturbereich von 70-90 °C durchführt.

## Claims

1. A process for preparing clear aqueous solutions of silicates (waterglasses) that are storage-stable against turbidity even at temperatures below -10°C for at least 1 month, comprising
• 20 to 40% by weight of SiO₂,
• 10 to 30% by weight of M₂O, where M is a cation from the group Li⁺, Na⁺, K⁺, NY₄⁺ and Y is an alkyl or alkenyl radical having 1 to 6 carbon atoms,
• water,
where
• an aqueous solution of a silicate (waterglass) of the general formula M₂O x nSiO₂, in which M is a cation from the group Li⁺, Na⁺, K⁺, NY₄⁺ and where Y is an alkyl or alkenyl radical having 1 to 6 carbon atoms and n is a number in the range from 1 to 5, is introduced as initial charge, where the solids content of the aqueous silicate solutions to be used for the filtration is 40 to 60% by weight, and
• a fine filtration is carried out over a filter element stable at pH values of 12 or more, with the proviso that the filtrate solution has a turbidity of 4 FNU or less, where the FNU values are measured in accordance with DIN EN ISO 7027, where the filter elements have a pore size in the range from 1 to 10 µm and the filtration is carried out in a temperature range from 70 to 90°C.

2. The process according to claim 1, where M is a cation from the group Li⁺, Na⁺, K⁺.

3. The process according to claim 1, where M is the cation Na⁺ and the sodium silicate used in the reaction has the formula Na₂O x nSiO₂, where n is a number in the range 1.6 to 2.8.

4. Clear aqueous solutions of silicates (waterglasses) that are storage-stable against turbidity even at temperatures below -10°C for at least 1 month, comprising
• 20 to 40% by weight of SiO₂,
• 10 to 30% by weight of M₂O, where M is a cation from the group Li⁺, Na⁺, K⁺, NY₄⁺ and Y is an alkyl or alkenyl radical having 1 to 6 carbon atoms,
• water,
where these solutions are obtainable by
• initially introducing an aqueous solution of a silicate (waterglass) of the general formula M₂O x nSiO₂, in which M is a cation from the group Li⁺, Na⁺, K⁺, NY₄⁺ and where Y is an alkyl or alkenyl radical having 1 to 6 carbon atoms and n is a number in the range from 1 to 5, where the solids content of the aqueous silicate solution to be used for the filtration is 40 to 60% by weight, and
• carrying out a fine filtration through a filter element that is stable at pH values of 12 or more, with the proviso that the filtrate solution has a turbidity of 4 FNU or less, where the FNU values are measured in accordance with DIN EN ISO 7027, where the filter elements have a pore size in the range from 1 to 10 µm and the filtration is carried out in a temperature range from 70 to 90°C.

## Revendications

1. Procédé de fabrication de solutions aqueuses de silicates (verres solubles) limpides même à des températures inférieures à -10 °C, stables au stockage pendant au moins 1 mois sans trouble, contenant :
- 20 à 40 % en poids de SiO₂,
- 10 à 30 % en poids de M₂O, M étant un cation du groupe constitué par Li⁺, Na⁺, K⁺, NY₄⁺, et Y signifiant un radical alkyle ou alcényle de 1 à 6 atomes C,
- de l'eau,
selon lequel
- une solution aqueuse d'un silicate (verre soluble) de formule générale M₂O x nSiO₂, M étant un cation du groupe constitué par Li⁺, Na⁺, K⁺, NY₄⁺, et Y signifiant un radical alkyle ou alcényle de 1 à 6 atomes C, et n signifiant un nombre dans la plage allant de 1 à 5, est chargée initialement, la teneur en solides des solutions aqueuses de silicate utilisées pour la filtration étant de 40 à 60 % en poids, et
- une filtration fine est réalisée par un élément de filtration stable à des valeurs de pH de 12 ou plus, à condition que la solution de filtrat présente un trouble de 4 FNU ou moins, les valeurs FNU étant mesurées selon DIN EN ISO 7027, les éléments de filtration présentant une taille de pore dans la plage allant de 1 à 10 µm et la filtration étant réalisée dans une plage de température allant de 70 à 90 °C.

2. Procédé selon la revendication 1, dans lequel M signifie un cation du groupe constitué par Li⁺, Na⁺, K⁺.

3. Procédé selon la revendication 1, dans lequel M signifie le cation Na⁺ et le silicate de sodium utilisé dans la réaction a la formule Na₂O x nSiO₂, n signifiant un nombre dans la plage allant de 1,6 à 2,8.

4. Solutions aqueuses de silicates (verres solubles) limpides même à des températures inférieures à -10 °C, stables au stockage pendant au moins 1 mois sans trouble, contenant :
- 20 à 40 % en poids de SiO₂,
- 10 à 30 % en poids de M₂O, M étant un cation du groupe constitué par Li⁺, Na⁺, K⁺, NY₄⁺, et Y signifiant un radical alkyle ou alcényle de 1 à 6 atomes C,
- de l'eau,
ces solutions pouvant être obtenues par un procédé selon lequel
- une solution aqueuse d'un silicate (verre soluble) de formule générale M₂O x nSiO₂, M étant un cation du groupe constitué par Li⁺, Na⁺, K⁺, NY₄⁺, et Y signifiant un radical alkyle ou alcényle de 1 à 6 atomes C, et n signifiant un nombre dans la plage allant de 1 à 5, est chargée initialement, la teneur en solides des solutions aqueuses de silicate utilisées pour la filtration étant de 40 à 60 % en poids, et
- une filtration fine est réalisée par un élément de filtration stable à des valeurs de pH de 12 ou plus, à condition que la solution de filtrat présente un trouble de 4 FNU ou moins, les valeurs FNU étant mesurées selon DIN EN ISO 7027, les éléments de filtration présentant une taille de pore dans la plage allant de 1 à 10 µm et la filtration étant réalisée dans une plage de température allant de 70 à 90 °C.
